(19) Europäisches Patentamt
European Patent Office
Office européen des brevets

(11) **EP 4 084 258 A1**

(12) **EUROPEAN PATENT APPLICATION**
published in accordance with Art. 153(4) EPC

(43) Date of publication:
**02.11.2022 Bulletin 2022/44**

(21) Application number: **19957324.7**

(22) Date of filing: **26.12.2019**

(51) International Patent Classification (IPC):
*H02J 3/38* (2006.01)　　　*H02J 3/00* (2006.01)

(52) Cooperative Patent Classification (CPC):
**H02J 3/00; H02J 3/38**

(86) International application number:
**PCT/CN2019/128907**

(87) International publication number:
**WO 2021/128223 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Shanghai Electric Wind Power Group Co., Ltd.**
**Shanghai 200241 (CN)**
• **SEWPG European Innovation Center ApS**
**8000 Aarhus C (DK)**

(72) Inventors:
• **HOU, Peng**
**Shanghai 200241 (CN)**

• **ZHU, Jiangsheng**
**Shanghai 200241 (CN)**
• **JIN, Rongsen**
**Shanghai 200241 (CN)**
• **CHEN, Le**
**Shanghai 200241 (CN)**
• **MENG, Xiaogang**
**Shanghai 200241 (CN)**
• **MIAO, Jun**
**Shanghai 200241 (CN)**

(74) Representative: **Bandpay & Greuter**
**30, rue Notre-Dame des Victoires**
**75002 Paris (FR)**

(54) **WIND FARM LAYOUT OPTIMIZATION METHOD AND OPTIMIZATION SYSTEM, AND COMPUTER READABLE STORAGE MEDIUM**

(57) The present application provides optimization methods, optimization systems and computer-readable storage media of wind farm layout. The optimization method includes: obtaining (101) wind turbine coordinate information of a wind farm. The optimization method further includes: determining (102) location coordinates of a substation of the wind farm and a topology of cable connections among a plurality of nodes at least based on the wind turbine coordinate information through a Mixed Integer Linear Programming model with a minimum cost of the wind farm as a target function. The plurality of nodes include a plurality of wind turbines and the substation. The target function includes variables indicating power carried by each of cables connecting the plurality of nodes.

FIG.1

**Description**

**TECHNICAL FIELD**

The present application relates to the technical field of wind farm planning, and in particular to optimization methods and optimization systems of wind farm layout, and computer-readable storage media.

**BACKGROUND**

Wind is one of pollution-free energy sources and inexhaustible. For areas with water shortage, fuel shortage or inconvenient transportation, such as coastal islands, grassland pastoral areas, mountain areas and plateau areas, wind power generation based on local conditions is very suitable and feasible. Wind power generation means converting kinetic energy of the wind into electrical energy and is very environmentally friendly. The wind energy reserves are huge, so wind power generation is increasingly valued by countries all over the world. Cable layout and substation siting of a wind farm have a great impact on a cost of the wind farm. How to optimize the cable layout and the substation siting has become an important task of wind farm layout optimization.

**SUMMARY**

The present application provides optimization methods and optimization systems of wind farm layout, and computer-readable storage media.

According to one aspect of the embodiments of the present application, there is provided an optimization method of wind farm layout, where a wind farm includes a plurality of nodes, and the plurality of nodes include a plurality of wind turbines and a substation, and the optimization method includes: obtaining wind turbine coordinate information of the wind farm; and determining location coordinates of the substation and a topology of cable connections among the plurality of nodes at least based on the wind turbine coordinate information by using a Mixed Integer Linear Programming model with a minimum cost of the wind farm as a target function, where the target function includes a variable indicating power carried by each of cables connecting the plurality of nodes.

According to another aspect of the embodiments of the present application, there is provided an optimization system of wind farm layout. The optimization system includes one or more processors for performing the above optimization method.

According to another aspect of the embodiments of the present application, there is provided a computer-readable storage medium, and a program is stored on the computer-readable storage medium, when the program is executed by a processor, the above optimization method is performed.

According to another aspect of the embodiments of the present application, there is provided an optimization method of wind farm layout, including: obtaining wind turbine coordinate information of a wind farm; establishing a Mixed Integer Linear Programming model with a minimum cost of the wind farm as a target function, where the target function includes variables indicating power carried by each of cables connecting a plurality of nodes; and the plurality of nodes include locations of wind turbines and a location of a substation; determining location coordinates of the substation and a topology of cable connections among the plurality of nodes through the Mixed Integer Linear Programming model at least based on the wind turbine coordinate information.

According to another aspect of the embodiments of the present application, there is provided an optimization system of wind farm layout. The optimization system includes one or more processors for performing the above optimization method.

According to another aspect of the embodiments of the present application, there is provided a computer-readable storage medium storing a program, when the program is executed by a processor, the above optimization method is performed.

The embodiments of the present application comprehensively consider impacts of substation siting, cable connection among wind turbines, cable connection between wind turbines and the substation, and power carried by cables on a cost of a wind farm for overall optimization, which may enhance an optimization effect on the cost to a greater extent and may improve the economic performance of an electrical design of the overall wind farm.

**BRIEF DESCRIPTION OF THE DRAWINGS**

In order to more clearly illustrate the technical solutions in embodiments of the present application, drawings used in the description of the embodiments will be briefly described below. It is obvious that the drawings in the following description are only some examples of the present application, and other drawings may also be obtained from those of ordinary skill in the art in view of the drawings.

FIG. 1 is a flowchart illustrating an embodiment of an optimization method of wind farm layout of the present application.

FIG. 2 is a flowchart illustrating steps for determining cable types of an optimization method of wind farm layout of the present application.

FIG. 3 is a schematic diagram illustrating an offshore substation location and a topology of cable connections obtained by related arts.

FIG. 4 is a schematic diagram illustrating an offshore substation location and a topology of cable connections obtained by an optimization method of wind farm layout of the present application.

FIG. 5 is a module block diagram illustrating an embodiment of an optimization system of wind farm layout of the present application.

FIG. 6 is a flowchart illustrating another embodiment of an optimization method of wind farm layout of the present application.

## DETAILED DESCRIPTION OF THE EMBODIMENTS

The technical solutions of embodiments of the present application will be described clearly and fully below in combination with drawings of the embodiments of the present application. The described embodiments are merely part of embodiments of the present application rather than all embodiments. All other embodiments obtained by those skilled in the art without creative effort based on the embodiments of the present application should fall in the scope of the present application.

Examples of embodiments will be described in detail herein, examples of which are illustrated in the drawings. When the following description relates to the drawings, unless specified otherwise, the same numerals in different drawings represent the same or similar elements. The implementations described in the following embodiments do not represent all implementations consistent with this application. On the contrary, the implementations are merely examples of apparatuses and methods that are described in detail in the appended claims and that are consistent with some aspects of this application.

The terms used in this application are merely for the purpose of describing specific embodiments, and are not intended to limit this application. The singular forms "a", "the" and "this" as used in this application and the appended claims may refer to the singular form or may include the plural form, unless the context clearly indicates otherwise. It should also be understood that the term "and/or" used herein includes any and all possible combinations of one or more of the associated listed items. Unless otherwise noted, words such as "connection" or "connected to" are not limited to physical or mechanical connections, but may include electrical connections, whether direct or indirect. The word "can" means capable.

Optimization methods of wind farm layout according to embodiments of the present application include: obtaining wind turbine coordinate information of a wind farm. The optimization methods further include: determining location coordinates of a substation of the wind farm and a topology of cable connections among a plurality of nodes at least based on the wind turbine coordinate information through a Mixed Integer Linear Programming model with a minimum cost of the wind farm as a target function. The target function includes variables indicating power carried by each of cables connecting the plurality of nodes. The wind farm includes the plurality of nodes, and the plurality of nodes include a plurality of wind turbines and the substation.

The optimization methods of wind farm layout according to the embodiments of the present application determine the location coordinates of the substation and the topology of cable connections among the plurality of nodes based on the wind turbine coordinate information through the Mixed Integer Linear Programming model, and the target function of the model includes the variables indicating the power carried by cables. Considering the impacts of substation siting, cable connection among wind turbines, cable connection between wind turbines and the substation and the power carried by cables on the cost of the wind farm by using the Mixed Integer Linear Programming model for overall optimization may enhance an optimization effect on the cost to a greater extent and improve an economic performance of an electrical design of the overall wind farm.

The optimization methods and optimization systems of wind farm layout, and computer-readable storage media of the present application will be described in detail below with reference to the drawings. Without conflict, the following embodiments and features in the implementations can be combined with each other.

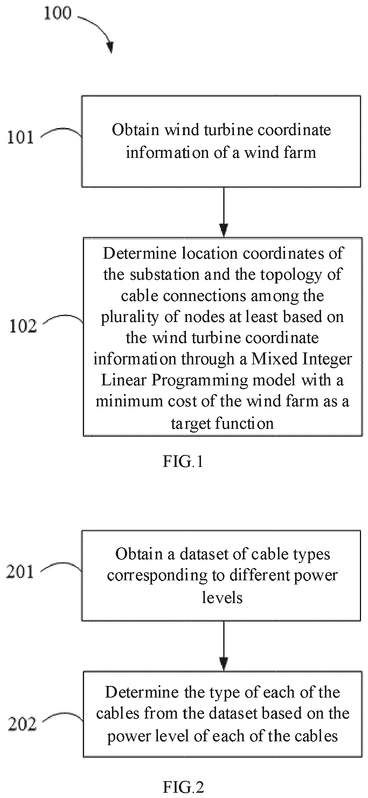

FIG. 1 is a flowchart illustrating an embodiment of an optimization method 100 of wind farm layout. The optimization method 100 can be used to optimize a layout of an offshore wind farm or of an onshore wind farm. There is a plurality of wind turbines distributed in the wind farm. The wind turbines collect wind energy and convert the wind energy into electrical energy. For wind farms that transmit electrical energy over long distances, especially offshore wind farms, a substation is built to reduce power loss in cables during transmission. The substation is electrically connected to the plurality of wind turbines, and gathers and boosts electrical energy from the plurality of wind turbines for long-distance transmission. For example, an offshore substation is built in an offshore wind farm, which gathers and boosts electrical energy from wind turbines and then transmits the electrical energy to an onshore substation. The wind farm includes a plurality of nodes, and the plurality of nodes include the plurality of wind turbines and the substation. The optimization method 100 can be used to optimize substation siting and a topology of cable connections. The optimization method 100 includes steps 101 and 102.

At step 101, wind turbine coordinate information of a wind farm is obtained.

In some embodiments, the wind turbine coordinate information may include coordinates of a wind turbine in a Cartesian coordinate system. In some embodiments, the wind turbine coordinate information may include longitude and latitude coordinates of a wind turbine. In other embodiments, the wind turbine coordinate information may include two-dimensional coordinates of a wind turbine. The two-dimensional coordinates of the wind turbine are the coordinates in a two-dimensional coordinate system. A positive direction of an x-axis of the two-dimensional coordinate system is from west to east, and a positive direction of a y-axis of the two-dimensional coordinate system is from south to north. In some embodiments, the longitude and latitude coordinates or the two-dimensional coordinates of the wind turbine may be obtained and converted into the coordinates in the Cartesian coordinate system.

In some embodiments, the wind turbine coordinate information may be read from a document (e.g., a Text document or an Excel document) in which the wind turbine coordinate information is recorded. In other embodiments, wind turbine coordinate information input by a user may be received.

At step 102, location coordinates of the substation and the topology of cable connections among the plurality of nodes are determined at least based on the wind turbine coordinate information through a Mixed Integer Linear Programming (MILP) model with a minimum cost of the wind farm as a target function. The plurality of nodes include the plurality of wind turbines and the substation. The target function includes variables indicating power carried by each of cables connecting the plurality of nodes.

Optimizing the location of the substation and a cable path based on the obtained wind turbine coordinate information, the location of the substation can be determined, and the topology of cable connections among the wind turbines and between the wind turbines and the substation can also be determined. The plurality of wind turbines are electrically connected to the same substation. Each wind turbine may be directly connected to the substation or indirectly connected to the substation through other wind turbines. The location of the substation and the topology of the cable connections among the wind turbines and between the wind turbines and the substation can be optimized. The topology of cable connections includes information of connections among the plurality of wind turbines, and also includes information of connections among the plurality of wind turbines and the substation.

The MILP model takes the minimum cost of the wind farm as an optimization target. In some embodiments, the cost of the wind farm includes a cable installation cost, a cable cost, and a power loss cost. The cable installation cost mainly includes a cost of installing (or called laying) and burying cables, which is mainly related to a length of the cables. The longer the length of the cables, the higher the cable installation cost. The cable cost mainly refers to a cost of cable materials, which is related to the length and cross-sectional areas of the cables. When the cross-sectional areas are certain, the longer the length of the cables, the higher the cable cost. When the length of the cables is certain, the larger the cross-sectional areas, the higher the cable cost. The cable cost can be equal to a product of a cable cost per unit length and the length of the cables. The power loss cost is the cost of power loss in the cables among the wind turbines during a life span of the wind farm and is related to the length of the cables and power carried by the cables. The longer the length of the cables, the higher the power loss cost; the higher the power carried by the cables, the higher the power loss cost. The higher the power carried by a cable, the larger the cross-sectional area of the cable needs to be.

In some embodiments, the MILP model takes a minimum sum of the cable installation cost, the cable cost and the power loss cost as the optimization target. A target function includes a sum of a cable installation cost function, a cable cost function and a power loss cost function. The expression of the target function Cos $t_{\min}$ is expression (1):

$$\text{Cos}\, t_{\min} = \min\left[\sum\sum\sum\left(C_{i,j}^{trench} + C_{i,j,k}^{cable} + C_{i,j,k}^{loss}\right)\right] \qquad (1)$$

Where, $C_{i,j}^{trench}$ represents the cable installation cost function; $C_{i,j,k}^{cable}$ represents the cable cost function; $C_{i,j,k}^{loss}$ represents the power loss cost function; $i,j$ represent node numbers of an $i$-th node and a $j$-th node respectively, $\forall i=[1, N_n]$, $\forall j=[1, N_n]$; and $N_n$ represents a total number of the plurality of nodes, which is the total number of the wind turbines connected to the same substation and the substation; $k$ represents a power level of a cable. In some embodiments, assuming that rated power of a plurality of wind turbines is equal, $k$ is the number of wind turbines gathered on a cable directly connecting two nodes along a direction of energy flow, that is, the number of wind turbines carried by the cable. When the rated power of the plurality of wind turbines is equal, the more the wind turbines carried by the cable, the higher the power level of the cable, that is, the greater power carried by the cable, the greater current flowing through the cable, so the larger the cross-sectional area of the cable needs to be, and thus the higher the cable cost and the power loss cost. In some embodiments, assuming that annual full load generation of the plurality of wind turbines is equal, annual utilization hours of the plurality of wind turbines are equal, and each wind turbine generates electricity at a fixed power. Since power of a wind turbine can be determined based on the annual full load generation and annual utilization hours of the wind turbine, the power of the plurality of wind turbines is equal. In this way, the more wind turbines carried by the cable, the higher the power level of the cable. In other embodiments, the target function includes one or any two of the cable installation cost function, the cable cost function, and the power loss cost function.

In some embodiments, a variable in the target function indicating the power carried by each of cables may be a variable indicating power level of each of the cables. The power levels may represent a multiple of rated power of one or more wind turbines carried by a cable, which corresponds to the number of the one or more wind turbines carried by the cable. In some embodiments, the variable included in the target function and indicating the power carried by each of cables connecting the plurality of nodes may include a decision-power variable matrix $B_{i,j,k}$. The decision-power variable matrix $B_{i,j,k}$ represents a variable matrix of a connection relationship between the $i$-th node and the $j$-th node. If the $i$-th node and the $j$-th node are directly connected, a cable connecting the $i$-th node and the $j$-th node may carry $k$ times rated current of the wind turbine, that is, may carry $k$ times rated power of the wind turbine and the power level is $k$. The connection relationship indicates whether two nodes are directly connected. The decision-power variable matrix $B_{i,j,k}$ may be a three-dimensional binary matrix of $N_n \times N_n \times N_t$. In some embodiments, if a value of a $(i, j, k)$ position of the decision-power variable matrix $B_{i,j,k}$ is 1, it indicates that the $i$-th node and the $j$-th node are directly connected, and a cable used for connection carries $k$ times rated power of the wind turbine. In other embodiments, if the value of the $(i, j, k)$ position of the decision-power variable matrix $B_{i,j,k}$ is 0, it indicates that the $i$-th node and the $j$-th node are directly connected, and a cable used for connection carries $k$ times rated power of the wind turbine. The decision-power variable matrix $B_{i,j,k}$ reflects a state of a connection between each two of the nodes and power carried by a cable.

In some embodiments, optimization variables of the target function include one or more location coordinate variables of the substation and one or more node connection decision variables representing connection relationships among the nodes. The wind turbine coordinate information is input into the MILP model, and the MILP model outputs the optimal solution of the location coordinate variables of the substation and the optimal solution of the node connection decision variables, so as to obtain the location coordinates of the substation and the topology of connections among the nodes. In some embodiments, the location coordinates of the substation are coordinates in a Cartesian coordinate system. In other embodiments, the location coordinates of the substation are longitude and latitude coordinates. In other embodiments, the location coordinates of the substation are two-dimensional coordinates.

In some embodiments, determining the topology of cable connections may include determining cable connection paths among the plurality of nodes. In some embodiments, the one or more node connection decision variables may include a two-dimensional decision variable matrix $X_{i,j}$, which represents the connection relationship between the $i$-th node and the $j$-th node. In some embodiments, a value of a $(i, j)$ position of the two-dimensional decision variable matrix $X_{i,j}$ is 1 when the $i$-th node and the $j$-th node are directly connected, and 0 otherwise. In other embodiments, the value of the $(i, j)$ position of the two-dimensional decision variable matrix $X_{i,j}$ is 0 when the $i$-th node and the $j$-th node are directly connected, and 1 otherwise.

In other embodiments, determining the topology of cable connections may include determining the cable connection paths among the plurality of nodes and power level of each of the cables. The node connection decision variables may represent the connection relationships among the nodes and the power level of each of the cables. The node connection decision variables include the decision-power variable matrix $B_{i,j,k}$.

The location of the substation has an impact on an optimal design of a topology of an overall wind farm electrical system, an optimization of the topology of cable connections, and the cost of the wind farm. The plurality of nodes in embodiments of the present application include one or more wind turbine locations and one or more substation locations. The impact of the location of the substation on the topology of cable connections is designed in the model. Based on the locations of the wind turbines, an overall optimization is carried out in combination with the location of the substation, and a result of the optimization is better. Moreover, the power loss in the cables also has a great impact on the cost of the wind farm. The target function includes variables indicating the power, and the power carried by the cables is designed into the model for better optimization. In the embodiments of the present application, the MILP model is used to optimize the location of the substation and the topology of cable connections as a whole with comprehensively considering impacts of substation siting, cable connections among wind turbines and cable connections between the wind turbines and the substation, and the power carried by the cables on the cost of the wind farm, which can greatly improve an optimization effect on the cost and improve an economic performance of an electrical design of the overall wind farm.

In some embodiments, the target function is obtained by at least performing linearization processing on a function to be optimized. The function to be optimized may be a function before the linearization processing of the target function. In some embodiments, the function to be optimized may be linearized by the MILP model. In other embodiments, the MILP model may also perform other processing on the function to be optimized. After processing the function to be optimized, the target function may be obtained. The function to be optimized may include non-convex nonlinear terms related to the location coordinate variables of the substation and/or the node connection decision variables. In some embodiments, the target function is obtained by at least using a linear programming method to eliminate the non-convex nonlinear terms in the function to be optimized, where the non-convex nonlinear terms are related to the location coordinate variables of the substation and/or the node connection decision variables. In some embodiments, the non-convex nonlinear terms include bilinear terms related to the location coordinate variables of the substation and/or the node connection decision variables. The target function is obtained by at least using the linear programming method to eliminate the bilinear terms related to the location coordinate variables of the substation and/or the node connection decision variables.

In some embodiments, the linear programming method is used to eliminate the non-convex nonlinear terms to make the function convex for easier solution. In some embodiments, the target function is obtained by at least using a simplex method to eliminate the non-convex nonlinear terms in the function to be optimized. In some embodiments, the target function is obtained by at least using a Big M method to eliminate the non-convex nonlinear terms in the function to be optimized. The target function is obtained by at least using the Big M method to eliminate the bilinear terms related to the location coordinate variables of the substation and/or the node connection decision variables. In some embodiments, an artificial variable of the Big M method is a maximum Euclidean distance among the plurality of wind turbines in the wind farm, that is, a maximum value among Euclidean distances between two wind turbines connected to a same substation in the wind farm. In other embodiments, the target function is obtained by at least using a two-stage method to eliminate the non-convex nonlinear terms in the function to be optimized.

The function to be optimized may include a nonlinear quadratic relationship of a Euclidean distance between a wind turbine and the substation. In some embodiments, the target function is obtained at least by linearizing the quadratic relationship of the Euclidean distance between the wind turbine and the substation included in the function to be optimized. In some embodiments, the quadratic relationship of the Euclidean distance between the wind turbine and the substation is linearized by using the linear programming method. The quadratic relationship of the Euclidean distance between an $i$-th turbine and the substation is $d_i = \sqrt{(Xt_i - Xs)^2 + (Yt_i - Ys)^2}, \quad \forall i = [2, N_n]$ : $(Xt_i, Yt_i)$ are the coordinates of the $i$-th wind turbine, and $(Xs, Ys)$ are the coordinates of the substation. In some embodiments, the target function is obtained by at least using a piecewise linear approximation method to linearize the quadratic relationship of the Euclidean distance between the wind turbine and the substation, which can improve the calculation speed. In some embodiments, the target function is obtained by at least using the piecewise linear approximation method of SOS1 (Special Ordered Set of type 1) to linearize the quadratic relationship of the Euclidean distance between the wind turbine and the substation, which can improve the calculation efficiency, especially for the layout optimization of a large-scale wind farm, and with improvement of an interval resolution ratio, the SOS1 can help the model to obtain more accurate results as well as ensuring the calculation efficiency.

The function to be optimized is linearized, the MIQP (Mix Integer Qudratic Programming) problem is converted into a MILP problem, and the target function is obtained to build the MILP model. In this way, the location of the substation can be determined in a continuous domain, and a better substation location can be selected to reduce the cost of the wind farm; moreover, a process of solving becomes easier, and the constructed MILP model can be solved with a commercial solver, which is more conducive to commercialization. In related arts, a heuristic algorithm is used to solve the optimization, and the characteristics of the model may not be specifically analyzed, and the difficulty caused by the nonlinear part of the model to a solution may be ignored. The heuristic algorithm cannot guarantee generation of an optimal solution in principle, and the algorithm results are unstable because they are solved randomly. Embodiments of the present application use the MILP model, which can alleviate problems such as the algorithm results are unstable due to the use of the heuristic algorithm.

In some embodiments, the target function may be converted from the function to be optimized by using an intermediate variable. In some embodiments, the intermediate variable may include a two-dimensional continuous variable-type matrix $Dn_{i,j}$ which represents relative distances between each two of the nodes. If a value of a $(i, j)$ position in the matrix $Dn_{i,j}$ is a non-zero value $d$, it indicates that the relative distance between the $i$-th node and the $j$-th node is $d$.

In some embodiments, the intermediate variable may include a two-dimensional continuous variable-type matrix $As_{i,j}$. If a value of a $(i, j)$ position in the matrix $As_{i,j}$ is a non-zero value $d$, it indicates that there is a cable with a length of $d$ between the $i$-th node and the $j$-th node.

In some embodiments, the intermediate variable may include a three-dimensional continuous variable-type matrix $L_{i,j,k}$. If a value of a position $(i, j, k)$ in the matrix $L_{i,j,k}$ is a non-zero value $d$, it indicates that there is a cable with length $d$ between the $i$-th node and the $j$-th node, and the cable carries $k$ wind turbines.

In some embodiments, the optimization method 100 includes obtaining wind farm information. The wind farm information includes at least one of an electricity price, a life span of the wind farm, annual utilization hours of the wind farm, or rated electrical parameters of the wind farm. The location coordinates of the substation and the topology of cable connections are determined by using the MILP model at least based on the wind farm information. The electricity price can be assumed to remain constant over the life span of the wind farm to simplify calculations. The life span of the wind farm may be, for example, 20 years, but not limited to this. The annual utilization hours represent the total number of hours available in a year in units of years. In some embodiments, the rated electrical parameters may include a rated voltage of the wind turbines, such as 33kV. In some embodiments, the rated electrical parameters may include an installed capacity of the wind turbines, such as 6 MW. In some embodiments, the wind farm information may also include an inflation rate, which may be assumed to remain constant over the life span. In some embodiments, the wind farm information may also include a power factor of a grid coupling point, such as 0.95. In some embodiments, the wind farm information may also include a distance that the substation transmits electrical energy to outside, such as a distance from an offshore substation to an onshore substation. In some embodiments, the target function includes one or more variables representing the wind farm information. The wind farm information is input into the MILP model to determine the location coordinates of the substation and the topology of cable connections, so that a better location of the substation and a better topology of cable connections can be obtained to keep the cost of the wind farm as low as possible.

In some embodiments, the cable connection paths among a plurality of nodes and power level of each of the cables may be determined, and a type of the cable may be determined according to the power level of each of the cables. A power level corresponds to a cross-sectional area of a cable, and the cross-sectional area of the cable corresponds to the cable type. The cable that can withstand a power level is selected according to the power level. In this way, cable selection can be realized.

The steps to determine a type of a cable are shown in FIG. 2. In some embodiments, at step 201, a dataset of cable types corresponding to different power levels is obtained. Cables of different types in the dataset have different cross-sectional areas and can withstand different powers, so different cable types correspond to different power levels. The dataset includes mapping relationships between power levels and cable types.

At step 202, the type of each of the cables are determined from the dataset based on the power level of each of the cables. The power level of each of the cables are determined through a MILP model, and the cable types can be determined according to the power level of each of the cables. Determining the types of the cables from the dataset can improve the efficiency of cable selection.

In some embodiments, a function to be optimized is obtained by decoupling decision parameters of cable selection and decision parameters of a topology of cable connections before obtaining the dataset of the cable types corresponding to different power levels. In related arts, a cable selection problem and a cable connection problem are considered together, and a constraint of the number (M) of optional cable types needs to be considered. For a wind farm with N wind turbines to optimize the cable connection, the algorithm complexity is $((N-1)!)^2 M$. Therefore, it presents characteristics of high complexity, which is a NP-hard (Non-deterministic Polynomial-hard) problem. In this embodiment, the cable selection problem and the cable connection problem are decoupled and the topology of cable connections is optimized by using the MILP model, which can reduce the algorithm complexity, reduce a dimension of an optimization variable, and thus reduce the number of overall constraints, and achieve the purpose of fast solution.

In some embodiments, the MILP model includes a constraint: $\text{diag}(X_{i,j})=0$. Where $X_{i,j}$ represents a two-dimensional decision variable matrix of a connection relationship between an $i$-th node and a $j$-th node, $\forall i=[1, N_n]$, $\forall j=[1, N_n]$, and $N_n$ represents a total number of the plurality of nodes, so as to ensure that each node is not connected to itself.

In some embodiments, the MILP model includes a constraint that the number of cables input per wind turbine does not exceed a cable quantity threshold Ntin. The cable quantity threshold Ntin can be set according to a practical application. In some embodiments, a power distribution cabinet of a wind turbine has two outlets, the cable quantity threshold Ntin is set to 2. In other embodiments, the power distribution cabinet of the wind turbine has one outlet, and the cable quantity threshold Ntin is set to 1.

In some embodiments, the MILP model includes a constraint that the total number of cables connected to a substation does not exceed a total number threshold Nfd. The total number threshold Nfd may be equal to the number of outgoing lines of the substation. In some embodiments, the number of outgoing lines of the substation may be determined according to a capacity of the substation, for example, the substation may have dozens of outgoing lines. In other embodiments, the number of outgoing lines of the substation may be determined according to the capacity of the substation and a dimension of security region of the substation.

In some embodiments, the MILP model includes a constraint that location coordinates of the substation are within a limited siting scope. The limited siting scope defines optimization boundaries of the substation. In some embodiments, Lxmin<=Gss(x)<=Lxmax, Lymin<=Gss(y)<=Lymax, where Gss(x) represents an x-coordinate of the location coordinates of the substation and Gss(y) represents a y-coordinate of the location coordinates of the substation; Lxmin represents a minimum value of an x-coordinate of the limited siting scope, Lxmax represents a maximum value of the x-coordinate of the limited siting scope; Lymin represents a minimum value of a y-coordinate of the limited siting scope, Lymax represents a maximum value of the y-coordinate of the limited siting scope. A location of the substation can be selected within a rectangular area. In other embodiments, the location of the substation may be selected within other shaped areas. The area limited by the limited siting scope is a continuous area, and the substation can be sited in the continuous area. In some embodiments, the limited siting scope may be determined according to a practical environment of the wind farm and the like. In this way, the location of the substation can be determined within an appropriate area, which is more in line with a practical application.

In some embodiments, the MILP model includes a constraint that output power minus input power of each wind turbine is equal to rated power of the wind turbine to meet practical applications. In some embodiments, the MILP model includes a constraint: $X_{i,j} \leq P_{i,j} \leq X_{i,j}*N_t$, where $X_{i,j}$ represents a two-dimensional decision variable matrix of a connection relationship between an $i$-th node and a $j$-th node, $\forall i=[1, N_n]$, $\forall j=[1, N_n]$, and $N_n$ represents the total number of nodes; $P_{i,j}$ represents power carried by a cable connecting the $i$-th node and the $j$-th node, $P_{i,j}$ is a real variable matrix of $N_n \times N_n$, if a value of a position $(i, j)$ in the $P_{i,j}$ is $k$, it indicates that there is a cable connection between the $i$-th node and the $j$-th node, and a power level of the cable is $k$; $N_t$ represents a maximum number of wind turbines that each of the cables can support, which is a maximum power level that each of the cables can withstand. In this way, the MILP model includes a power balance constraint (Kirchhoff law), which can avoid a formation of loops in the topology of cable connections.

In some embodiments, if a connection line between a a-th wind turbine and a b-th wind turbine is to be crossed a connection line between a c-th wind turbine and a d-th wind turbine, the MILP model may include a constraint that there is no more than one connection line among the a-th wind turbine, the b-th wind turbine, the c-th wind turbine and the d-th wind turbine, where, $a,b,c,d \in [2, N_n]$, and $N_n$ represents the total number of the plurality of nodes. In response to determining that the connection line between the a-th wind turbine and the b-th wind turbine is to be crossed the connection line between the c-th wind turbine and the d-th wind turbine, the above constraint can be set so that no more than one connection is allowed among the four wind turbines. In this way, crossed cables among wind turbines are eliminated. In some embodiments, the constraint is $X_{a,b} + X_{b,a} + X_{c,d} + X_{d,c} \leq 1, a,b,c,d \in [2,N_n]$ : where, X represents a two-dimensional decision variable matrix of nodes connection relationships, and a position value of the two-dimensional decision variable matrix is 1 to indicate connection, and 0 to indicate no connection; $X_{a,b}$ represents a connection relationship between the a-th wind turbine and the b-th wind turbine, $X_{b,a}$ represents a connection relationship between the b-th wind turbine and the a-th wind turbine, $X_{c,d}$ represents a connection relationship between the c-th wind turbine and the d-th wind turbine, $X_{d,c}$ represents a connection relationship between the d-th wind turbine and the c-th wind turbine.

In some embodiments, coordinates of the a-th wind turbine are $(x_1, y_1)$, coordinates of the b-th wind turbine are $(x_2, y_2)$, coordinates of the c-th wind turbine are $(x_3, y_3)$, and coordinates of the d-th wind turbine are $(x_4, y_4)$. If the connection line between the a-th wind turbine and the b-th wind turbine is to be crossed the connection line between the c-th wind turbine and the d-th wind turbine, the coordinates of the four wind turbines meet following expression (2)

$$\begin{cases} \alpha x_1 + (1-\alpha)x_2 = \beta x_3 + (1-\beta)x_4 \\ \alpha y_1 + (1-\alpha)y_2 = \beta \cdot y_3 + (1-\beta)y_4 \end{cases} \qquad (2)$$

where $\alpha \in [0,1]$, $\beta \in [0,1]$.

Through values of the parameters $\alpha$ and $\beta$ in expression (2), whether the connection line between the a-th wind turbine and the b-th wind turbine is to be crossed the connection line between the c-th wind turbine and the d-th wind turbine can be determined. If $\alpha \in [0,1]$, $\beta \in [0,1]$, it is determined that the connection line between the a-th wind turbine and the b-th wind turbine is to be crossed the connection line between the c-th wind turbine and the d-th wind turbine, so that whether cable connections are to be crossed is conveniently determined. In this way, the constraint can be set in the MILP model to eliminate a crossing of cables among the wind turbines.

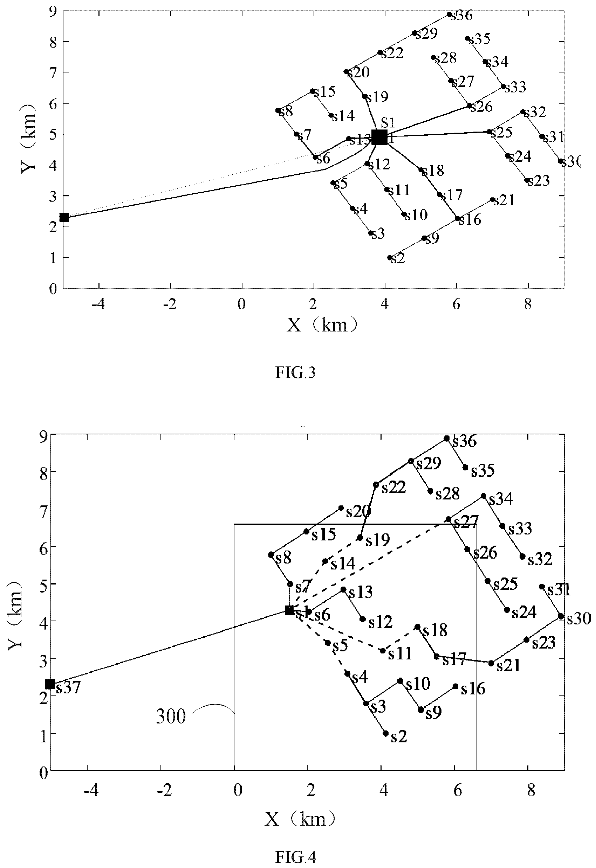

FIG. 3 is a schematic diagram illustrating an offshore substation location and a topology of cable connections obtained by related arts. FIG. 4 is a schematic diagram illustrating an offshore substation location and a topology of cable connections obtained by methods of embodiments of the present application. In the Figures, S1 represents an offshore substation, S2-S36 represent wind turbines, and S37 represents an onshore substation. Locations of the wind turbines S2-S36 in FIG. 3 and FIG. 4 are same, and locations of the onshore substation S37 in FIG. 3 and FIG. 4 are same. The location of the offshore substation S1 and the topology of cable connections obtained by the optimization method of the embodiments of the present application shown in FIG. 4 are different from those shown in FIG. 3. The optimization method 100 of the embodiment can better optimize the location of the substation S1 and the topology of cable connections. In FIG. 4, the location of the offshore substation S1 is determined in an area 300, and the area 300 represents optimization boundaries of the offshore substation S1, and the offshore substation S1 can be sited in a continuous domain.

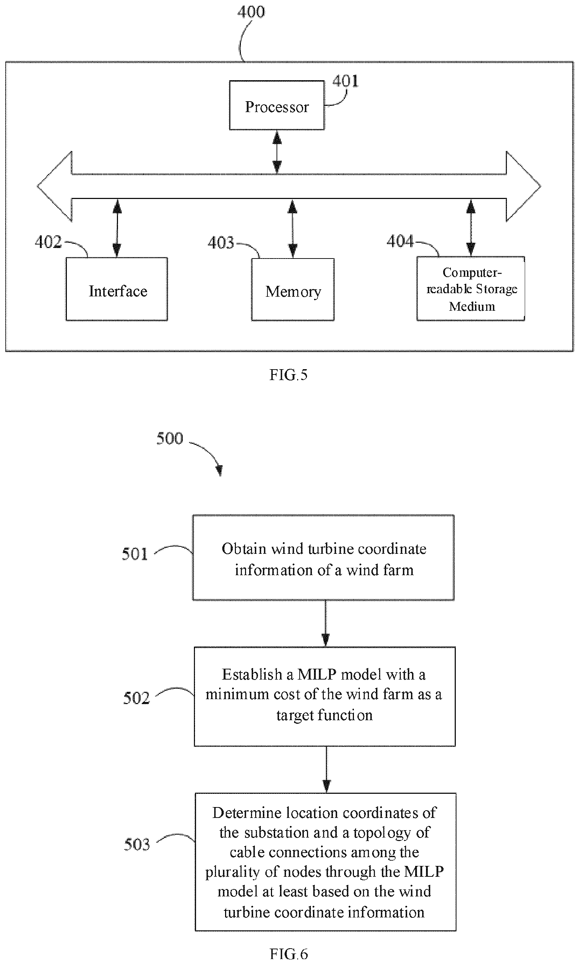

FIG. 5 is a module block diagram illustrating an embodiment of an optimization system 400 of wind farm layout. The optimization system 400 includes one or more processors 401 for performing the optimization method 100. In some embodiments, the optimization system 400 may include a computer-readable storage medium 404, which may store programs that may be called by the one or more processors 401, and may include a non-volatile storage medium. In some embodiments, the optimization system 400 may include a memory 403 and an interface 402. In some embodiments, the optimization system 400 may also include other hardware depending on a practical application.

The computer-readable storage medium 404 in embodiments of the present application stores a program, and when the program is executed by the processor 401, the optimization method 100 is performed.

This application may take the form of a computer program product implemented on one or more storage media (including but not limited to disk storage, a CD-ROM, an optical storage, etc.) containing program codes. The computer-readable storage medium includes permanent and non-persistent, removable and non-removable medium. Information storage can be accomplished by any method or technology. Information can be computer-readable instructions, data structures, modules of a program, or other data. Examples of the computer-readable storage medium include, but are not limited to, phase change memory (PRAM), static random access memory (SRAM), dynamic random access memory (DRAM), other types of random access memory (RAM), and read-only memory (ROM), electrically erasable programmable read-only memory (EEPROM), flash memory or other memory technology, read-only disc read-only memory (CD-ROM), digital versatile disc (DVD) or other optical storage, magnetic tape cartridges, magnetic tape storage or other magnetic storage devices or any other non-transmitting medium which can be used to store information that can be accessed by a computing device.

FIG. 6 is a flowchart illustrating another embodiment of an optimization method 500 of wind farm layout. The optimization method 500 includes steps 501 and 503.

At step 501, wind turbine coordinate information of a wind farm is obtained. The step 501 is similar to the step 101 of the optimization method 100 shown in FIG. 1, and details will not be repeated here.

At step 502, a MILP model with a minimum cost of the wind farm as a target function is established. The target function includes variables indicating power carried by each of cables connecting a plurality of nodes, and the plurality of nodes include locations of wind turbines and a location of a substation.

At step 503, location coordinates of the substation and a topology of cable connections among the plurality of nodes are determined through the MILP model at least based on the wind turbine coordinate information. The step 503 is similar to the step 102 of the optimization method 100 shown in FIG. 1, and details will not be repeated here.

In some embodiments, the step 502 of establishing the MILP model includes establishing a function to be optimized; the target function is obtained by at least using a linear programming method to eliminate non-convex nonlinear terms in the function to be optimized, where, the non-convex nonlinear terms are related to location coordinate variables of the substation and/or node connection decision variables. The node connection decision variables represent connection relationships among the plurality of nodes. In some embodiments, a Big M method is used to eliminate the non-convex nonlinear terms in the function to be optimized. In some embodiments, an artificial variable of the Big M method is a maximum Euclidean distance among the plurality of wind turbines of the wind farm.

In some embodiments, the step 502 of establishing the MILP model includes obtaining the target function by at least linearizing a quadratic relationship of a Euclidean distance between a wind turbine and the substation in the function to be optimized. In some embodiments, a plurality of quadratic relationships of Euclidean distances between the wind turbines and the substation are linearized by using a piecewise linear approximation method.

In some embodiments, the optimization method 500 includes obtaining wind farm information. The wind farm information includes at least one of an electricity price, a life span of the wind farm, annual equivalent utilization hours of the wind farm, or rated electrical parameters of the wind farm. The location coordinates of the substation and the topology of cable connections are determined by using the MILP model at least based on the wind farm information.

In some embodiments, the step 503 of determining the location coordinates of the substation and the topology of cable connections among the plurality of nodes includes determining cable connection paths among the plurality of wind turbines and power level of each of the cables. In some embodiments, the optimization method 500 includes determining cable types based on the power levels of the cables. In some embodiments, the optimization method 500 includes obtaining a dataset of cable types corresponding to different power levels; and determining the type of each of the cables from the dataset based on the power level of each of the cables.

In some embodiments, the optimization method 500 includes obtaining the function to be optimized by decoupling decision parameters of cable selection and decision parameters of the topology of cable connections before obtaining the dataset of cable types corresponding to different power levels.

In some embodiments, the MILP model includes constraints, and the constraints may include any one or more of the constraints described above, which will not be repeated here.

In some embodiments, the step 501 of establishing the MILP model includes: if a connection line between an a-th wind turbine and a b-th wind turbine is to be crossed a connection line between a c-th wind turbine and a d-th wind turbine, a constraint is set, and the constraint is that there is no more than one connection line among the a-th wind turbine, the b-th wind turbine, the c-th wind turbine and the d-th wind turbine; where, $a,b,c,d \in [2,N_n]$, and $N_n$ represents a total number of the plurality of nodes.

Embodiments of the present application provide an optimization system of wind farm layout, including one or more processors used for performing the optimization method 500.

Embodiments of the present application provide a computer-readable storage medium on which a program is stored, and when the program is executed by a processor, the optimization method 500 is performed.

It is to be noted that the relational terms such as "first" and "second" used herein are merely intended to distinguish one entity or operation from another entity or operation rather than to require or imply any such actual relation or order existing between these entities or operations. Also, the term "including", "containing" or any variation thereof is intended to encompass non-exclusive inclusion, so that a process, method, article or device including a series of elements includes not only those elements but also other elements not listed explicitly or those elements inherent to such a process, method, article or device. Without more restrictions, the elements defined by the sentence "including a ..." do not exclude the existence of other identical elements in the process, method, product or device including the elements.

The methods and devices provided by the embodiments of the present application are introduced in detail above. In this paper, specific examples are applied to explain principles and implementation methods of the application. The descriptions of the above embodiments are only used to help understand the methods and core ideas of the application; At the same time, the skilled in the art may make modifications to the specific implementations and application range according to the idea of this application. In conclusion, the content of the specification is not to be construed as a limitation to this application.

The contents disclosed in this patent document contain materials that is subject to copyright protection. The copyright belongs to the copyright owner. The copyright owner has no objection to the reproduction by anyone of the patent document or the patent disclosure as it exists in the official records and archives of the Patent and Trademark Office.

## Claims

1. An optimization method of wind farm layout, a wind farm comprises a plurality of nodes, the plurality of nodes comprise a plurality of wind turbines and a substation, wherein the optimization method comprises:

   obtaining wind turbine coordinate information of the wind farm; and
   determining, at least based on the wind turbine coordinate information, location coordinates of the substation and a topology of cable connections among the plurality of nodes by using a Mixed Integer Linear Programming model with a minimum cost of the wind farm as a target function, wherein the target function comprises a variable indicating power carried by each of cables connecting the plurality of nodes.

2. The optimization method of claim 1, wherein the target function is obtained by at least using a linear programming manner to eliminate non-convex nonlinear terms in a function to be optimized, wherein the non-convex nonlinear terms are related to location coordinate variables of the substation and/or node connection decision variables indicating connection relationships among the plurality of nodes.

3. The optimization method of claim 2, wherein the target function is obtained by at least using a big M manner to eliminate the non-convex nonlinear terms in the function to be optimized.

4. The optimization method of claim 3, wherein an artificial variable of the big M manner is a maximum Euclidean distance among the plurality of wind turbines in the wind farm.

5. The optimization method of any one of claims 1-4, wherein the target function is obtained at least by linearizing a quadratic relationship of a Euclidean distance between a wind turbine and the substation in a function to be optimized.

6. The optimization method of claim 5, wherein the target function is obtained by at least using a piecewise linear approximation manner to linearize the quadratic relationship of the Euclidean distance between the wind turbine and the substation.

7. The optimization method of claim 1,

   wherein the optimization method comprises:
   obtaining wind farm information comprising at least one of an electricity price, a life span of the wind farm, annual utilization hours of the wind farm or rated electricity parameters of the wind farm, and
   wherein determining the location coordinates of the substation and the topology of cable connections among the plurality of nodes comprises:
   determining, at least based on the wind farm information, the location coordinates of the substation and the topology of cable connections through the Mixed Integer Linear Programming model.

8. The optimization method of claim 1, wherein determining the location coordinates of the substation and the topology of cable connections among the plurality of nodes comprises:
determining cable connection paths among the plurality of nodes and a power level of each of the cables.

9. The optimization method of claim 8, wherein the optimization method comprises:
determining, based on the power level of each of the cables, a type of the cable.

10. The optimization method of claim 9, wherein the optimization method comprises:

obtaining a dataset of cable types corresponding to different power levels; and
determining the type of the cable from the dataset based on the power level of the cable.

11. The optimization method of claim 10, wherein a function to be optimized is obtained by decoupling decision parameters of cable selection and decision parameters of the topology of cable connections before obtaining the dataset of the cable types corresponding to different power levels.

12. The optimization method of claim 1, wherein the Mixed Integer Linear Programming model comprises a constraint:

$$\mathrm{diag}(X_{i,j}) = 0,$$

wherein, $X_{i,j}$ represents a two-dimensional decision variable matrix of a connection relationship between an $i$-th node and a $j$-th node,

$$\forall i = [1, N_n],$$

$$\forall j = [1, N_n],$$

and
$N_n$ represents a total number of the plurality of nodes.

13. The optimization method of claim 1, wherein the Mixed Integer Linear Programming model comprises a constraint that a number of cables input per wind turbine does not exceed a cable quantity threshold.

14. The optimization method of claim 1, wherein the Mixed Integer Linear Programming model comprises a constraint that a total number of cables connected to the substation does not exceed a total number threshold.

15. The optimization method of claim 1, wherein the Mixed Integer Linear Programming model comprises a constraint that the location coordinates of the substation are within a limited siting scope.

16. The optimization method of claim 1, wherein the Mixed Integer Linear Programming model comprises a constraint that output power minus input power of each wind turbine is equal to rated power of the wind turbine.

17. The optimization method of claim 1, wherein the Mixed Integer Linear Programming model comprises a constraint:

$$X_{i,j} \leq P_{i,j} \leq X_{i,j} * N_t,$$

wherein, $X_{i,j}$ represents a two-dimensional decision variable matrix of a connection relationship between an $i$-th node and a $j$-th node,

$$\forall i = [1, N_n],$$

$$\forall j = [1, N_n],$$

$N_n$ represents a total number of the plurality of nodes,
Pi, j represents power carried by a cable connecting the *i*-th node and the *j*-th node, and
$N_t$ represents a maximum number of wind turbines that each of the cables can support.

18. The optimization method of claim 1, in response to determining that a connection line between an a-th wind turbine and a b-th wind turbine is to be crossed a connection line between a c-th wind turbine and a d-th wind turbine, the Mixed Integer Linear Programming model comprises a constraint that there is no more than one connection line among the a-th wind turbine, the b-th wind turbine, the c-th wind turbine and the d-th wind turbine, wherein $a,b,c,d \in [2, N_n]$, and $N_n$ represents a total number of the plurality of nodes.

19. The optimization method of claim 1, wherein the target function comprises a sum of a cable installation cost function, a cable cost function and a power loss cost function.

20. An optimization system of wind farm layout, wherein the optimization system comprises one or more processors for performing the optimization method according to any one of claims 1-19.

21. A computer-readable storage medium, wherein a program is stored on the computer-readable storage medium, and when the program is executed by a processor, the optimization method according to any one of claims 1-19 is performed.

22. An optimization method of wind farm layout, comprising:

obtaining wind turbine coordinate information of a wind farm;
establishing a Mixed Integer Linear Programming model with a minimum cost of the wind farm as a target function, wherein the target function comprises variables indicating power carried by each of cables connecting a plurality of nodes, and the plurality of nodes comprise a plurality of wind turbines and a substation; and
determining, at least based on the wind turbine coordinate information, location coordinates of the substation and a topology of cable connections among the plurality of nodes through the Mixed Integer Linear Programming model.

23. The optimization method of claim 22, wherein establishing the Mixed Integer Linear Programming model with the minimum cost of the wind farm as the target function comprises:

establishing a function to be optimized; and
obtaining the target function by at least using a linear programming manner to eliminate non-convex nonlinear terms related to location coordinate variables of the substation and/or node connection decision variables in the function to be optimized, wherein the node connection decision variables indicate connection relationships among the plurality of nodes.

24. The optimization method of claim 23, wherein at least using the linear programming manner to eliminate the non-convex nonlinear terms related to the location coordinate variables of the substation and/or the node connection decision variables in the function to be optimized comprises:
eliminating the non-convex nonlinear terms in the function to be optimized by using a big M manner.

25. The optimization method of claim 24, wherein an artificial variable of the big M manner is a maximum Euclidean distance among the plurality of wind turbines in the wind farm.

26. The optimization method of any one of claims 22-25, wherein establishing the Mixed Integer Linear Programming model with the minimum cost of the wind farm as the target function comprises:
obtaining the target function at least by linearizing a quadratic relationship of a Euclidean distance between a wind turbine and the substation in a function to be optimized.

27. The optimization method of claim 26, wherein at least by linearizing the quadratic relationship of the Euclidean distance between the wind turbine and the substation in the function to be optimized comprises:
linearizing a plurality of quadratic relationships of Euclidean distances between the wind turbines and the substation by using a piecewise linear approximation manner.

28. The optimization method of claim 22,

wherein the optimization method comprises:
obtaining wind farm information comprising at least one of an electricity price, a life span of the wind farm, annual equivalent utilization hours of the wind farm or rated electricity parameters of the wind farm, and wherein determining the location coordinates of the substation and the topology of cable connections among the plurality of nodes comprises:
determining, at least based on the wind farm information, the location coordinates of the substation and the topology of cable connections through the Mixed Integer Linear Programming model.

29. The optimization method of claim 22, wherein determining the location coordinates of the substation and the topology of cable connections among the plurality of nodes comprises:
determining cable connection paths among the plurality of wind turbines and a power level of each of the cables.

30. The optimization method of claim 29, wherein the optimization method comprises:
determining, based on the power level of each of the cables, a type of the cable.

31. The optimization method of claim 30, wherein the optimization method comprises:

obtaining a dataset of cable types corresponding to different power levels; and
determining the type of the cable from the dataset based on the power level of the cable.

32. The optimization method of claim 31, wherein the optimization method comprises: obtaining a function to be optimized by decoupling decision parameters of cable selection and decision parameters of the topology of cable connections before obtaining the dataset of the cable types corresponding to different power levels.

33. The optimization method of claim 22, wherein the Mixed Integer Linear Programming model comprises a constraint:

$$\mathrm{diag}(X_{i,j}) = 0,$$

wherein, $X_{i,j}$ represents a two-dimensional decision variable matrix of a connection relationship between an $i$-th node and a $j$-th node,

$$\forall i = [1, N_n],$$

$$\forall j = [1, N_n],$$

and
$N_n$ represents a total number of the plurality of nodes.

34. The optimization method of claim 22, wherein the Mixed Integer Linear Programming model comprises a constraint that a number of cables input per wind turbine does not exceed a cable quantity threshold.

35. The optimization method of claim 22, wherein the Mixed Integer Linear Programming model comprises a constraint that a total number of cables connected to the substation does not exceed a total number threshold.

36. The optimization method of claim 22, wherein the Mixed Integer Linear Programming model comprises a constraint that the location coordinates of the substation are within a limited siting scope.

37. The optimization method of claim 22, wherein the Mixed Integer Linear Programming model comprises a constraint that output power minus input power of each wind turbine is equal to rated power of the wind turbine.

38. The optimization method of claim 22, wherein the Mixed Integer Linear Programming model comprises a constraint:

$$X_{i,j} \leq P_{i,j} \leq X_{i,j} * N_t,$$

wherein, $X_{i,j}$ represents a two-dimensional decision variable matrix of a connection relationship between an $i$-th node and a $j$-th node,

$$\forall i = [1, N_n],$$

$$\forall j = [1, N_n],$$

$N_n$ represents a total number of the plurality of nodes,
Pi, j represents power carried by a cable connecting the $i$-th node and the $j$-th node, and
$N_t$ represents a maximum number of wind turbines that each of the cables can support.

39. The optimization method of claim 22 wherein establishing the Mixed Integer Linear Programming model with the minimum cost of the wind farm as the target function comprises:
in response to determining that a connection line between an a-th wind turbine and a b-th wind turbine is to be crossed a connection line between a c-th wind turbine and a d-th wind turbine, setting a constraint that there is no more than one connection line among the a-th wind turbine, the b-th wind turbine, the c-th wind turbine and the d-th wind turbine, wherein $a,b,c,d \in [2, N_n]$, and $N_n$ represents a total number of the plurality of nodes.

40. The optimization method of claim 22, wherein the target function comprises a sum of a cable installation cost function, a cable cost function and a power loss cost function.

41. An optimization system of wind farm layout, wherein the optimization system comprises one or more processors for performing the optimization method according to any one of claims 22-40.

42. A computer-readable storage medium, wherein a program is stored on the computer-readable storage medium, and when the program is executed by a processor, the optimization method according to any one of claims 22-40 is performed.

100

| 101 | Obtain wind turbine coordinate information of a wind farm |

| 102 | Determine location coordinates of the substation and the topology of cable connections among the plurality of nodes at least based on the wind turbine coordinate information through a Mixed Integer Linear Programming model with a minimum cost of the wind farm as a target function |

FIG.1

| 201 | Obtain a dataset of cable types corresponding to different power levels |

| 202 | Determine the type of each of the cables from the dataset based on the power level of each of the cables |

FIG.2

FIG.3

FIG.4

400

401

Processor

402

Interface

403

Memory

404

Computer-readable Storage Medium

FIG.5

500

501 — Obtain wind turbine coordinate information of a wind farm

502 — Establish a MILP model with a minimum cost of the wind farm as a target function

503 — Determine location coordinates of the substation and a topology of cable connections among the plurality of nodes through the MILP model at least based on the wind turbine coordinate information

FIG.6

## INTERNATIONAL SEARCH REPORT

| | International application No. |
|---|---|
| | **PCT/CN2019/128907** |

| A. | CLASSIFICATION OF SUBJECT MATTER |
|---|---|

H02J 3/38(2006.01)i; H02J 3/00(2006.01)i

According to International Patent Classification (IPC) or to both national classification and IPC

| B. | FIELDS SEARCHED |
|---|---|

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

WPI, EPODOC, CNPAT, CNKI: 上海电气风电集团股份有限公司, 风电, 风机, 规划, 变电站, 升压站, 选址, 位置, 混合整数线性规划, MILP

| C. | DOCUMENTS CONSIDERED TO BE RELEVANT |
|---|---|

| Category* | Citation of document, with indication, where appropriate, of the relevant passages | Relevant to claim No. |
|---|---|---|
| A | 甘磊 等 (GAN, Lei et al.). "风电集群接入系统规划的混合整数线性模型 (A MILP Model for Grid-Connection Transmission System Planning of Wind Farm Clusters)" 电工技术学报 *(Transactions of China Electrotechnical Society)*, Vol. 32, No. 5, 31 March 2017 (2017-03-31), page 166 column 2 last 2 paragraphs - page 167 column 1, page 168 column 2 | 1-42 |
| A | 穆永铮 等 (MU, Yongzheng et al.). "汇集站和集群中心站分级协调的风场群接入系统优化规划 (Multiple Wind Farms Integration Grid Optimal Planning Considering Coordination of Collecting Stations and Cluster Stations)" 中国电机工程学报 *(Proceedings of the CSEE)*, Vol. 34, 20 November 2014 (2014-11-20), pp. 1-8 | 1-42 |
| A | Antonio Frangioni et al. "Tighter approximated MILP formulations for unit commitment problems" *IEEE Transactions on Power Systems*, 31 December 2009 (2009-12-31), pp. 105-113 | 1-42 |
| A | CN 108879769 A (TSINGHUA UNIVERSITY et al.) 23 November 2018 (2018-11-23) entire document | 1-42 |
| A | CN 104537427 A (TSINGHUA UNIVERSITY et al.) 22 April 2015 (2015-04-22) entire document | 1-42 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 September 2020** | **28 September 2020** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

# EP 4 084 258 A1

## INTERNATIONAL SEARCH REPORT

International application No.

**PCT/CN2019/128907**

### C.    DOCUMENTS CONSIDERED TO BE RELEVANT

| Category* | Citation of document, with indication, where appropriate, of the relevant passages | Relevant to claim No. |
|---|---|---|
| A | CN 106203744 A (GUANGDONG ELECTRIC POWER DESIGN INSTITUTE CO., LTD. OF CHINA ENERGY ENGINEERING GROUP CORPORATION LIMITED) 07 December 2016 (2016-12-07)<br>        entire document | 1-42 |

Form PCT/ISA/210 (second sheet) (January 2015)

19

**INTERNATIONAL SEARCH REPORT**
Information on patent family members

International application No.

**PCT/CN2019/128907**

| Patent document cited in search report | | | Publication date (day/month/year) | Patent family member(s) | | | Publication date (day/month/year) |
|---|---|---|---|---|---|---|---|
| CN | 108879769 | A | 23 November 2018 | None | | | |
| CN | 104537427 | A | 22 April 2015 | CN | 104537427 | B | 16 February 2018 |
| CN | 106203744 | A | 07 December 2016 | None | | | |

Form PCT/ISA/210 (patent family annex) (January 2015)